(19) Europäisches Patentamt / European Patent Office / Office européen des brevets

(11) **EP 3 651 543 B1**

(12) **EUROPEAN PATENT SPECIFICATION**

(45) Date of publication and mention of the grant of the patent:
**17.09.2025 Bulletin 2025/38**

(21) Application number: **18848264.0**

(22) Date of filing: **27.07.2018**

(51) International Patent Classification (IPC):
*H04W 48/18* (2009.01)   *H04W 76/16* (2018.01)
*H04W 48/16* (2009.01)   *H04W 76/19* (2018.01)
*H04W 88/06* (2009.01)

(52) Cooperative Patent Classification (CPC):
**H04W 48/18; H04W 48/16; H04W 76/19; H04W 88/06**

(86) International application number:
**PCT/KR2018/008536**

(87) International publication number:
**WO 2019/039754 (28.02.2019 Gazette 2019/09)**

(54) **TERMINAL, BASE STATION, AND CONTROL METHODS THEREOF IN WIRELESS COMMUNICATION SYSTEM**

ENDGERÄT, BASISSTATION UND STEUERVERFAHREN DAFÜR IN EINEM DRAHTLOSKOMMUNIKATIONSSYSTEM

TERMINAL, STATION DE BASE ET LEURS PROCÉDÉS DE COMMANDE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2017 KR 20170105927**

(43) Date of publication of application:
**13.05.2020 Bulletin 2020/20**

(73) Proprietor: **Samsung Electronics Co., Ltd.**
**Suwon-si, Gyeonggi-do 16677 (KR)**

(72) Inventors:
• **KANG, Youngmyoung**
  **Suwon-si, Gyeonggi-do, 16677 (KR)**
• **LEE, Woohwan**
  **Suwon-si, Gyeonggi-do, 16677 (KR)**
• **JEON, Minseok**
  **Suwon-si, Gyeonggi-do, 16677 (KR)**

(74) Representative: **Gulde & Partner**
**Patent- und Rechtsanwaltskanzlei mbB**
**Berliner Freiheit 2**
**10785 Berlin (DE)**

(56) References cited:
WO-A1-2016/126238   WO-A1-2017/080598
CN-A- 106 165 488    KR-B1- 101 248 542
US-A1- 2015 173 004  US-A1- 2016 227 459
US-A1- 2017 181 052  US-A1- 2017 265 057

• ERICSSON: "Overview of RRC architecture options for the LTE-NR tight interworking", vol. RAN WG2, no. Nanjing, P.R. China; 20160523 - 20160527, 22 May 2016 (2016-05-22), XP051105340, Retrieved from the Internet <URL:http://www.3gpp.org/ftp/Meetings_3GPP_SYNC/RAN2/Docs/> [retrieved on 20160522]
• ERICSSON: "NR/LTE tight interworking: CP requirements on Mobility and Dual Connectivity", vol. RAN WG2, no. Nanjing, China; 20160523 - 20160527, 22 May 2016 (2016-05-22), XP051105328, Retrieved from the Internet <URL:http://www.3gpp.org/ftp/Meetings_3GPP_SYNC/RAN2/Docs/> [retrieved on 20160522]

- NTT DOCOMO ET AL: "System Information handling for LTE-NR tight interworking", vol. RAN WG2, no. Nanjing, China; 20160523 - 20160527, 13 May 2016 (2016-05-13), XP051095633, Retrieved from the Internet <URL:http://www.3gpp.org/ftp/tsg_ran/WG2_RL2/TSGR2_94/Docs/> [retrieved on 20160513]
- INTERDIGITAL COMMUNICATIONS: "Control Plane Aspects for Interworking between NR and LTE", vol. RAN WG2, no. Nanjing, China; 20160523 - 20160527, 14 May 2016 (2016-05-14), XP051095284, Retrieved from the Internet <URL:http://www.3gpp.org/ftp/tsg_ran/WG2_RL2/TSGR2_94/Docs/> [retrieved on 20160514]
- NOKIA ET AL: "NR control plane architecture options for LTE-NR tight interworking", vol. RAN WG2, no. Nanjing, China; 20160523 - 20160527, 22 May 2016 (2016-05-22), XP051104989, Retrieved from the Internet <URL:http://www.3gpp.org/ftp/Meetings_3GPP_SYNC/RAN2/Docs/> [retrieved on 20160522]
- ZTE: "Discussion on control plane for the DC based LTE/NR tight interworking", vol. RAN WG2, no. Nanjing, China; 20160523 - 20160527, 13 May 2016 (2016-05-13), XP051095713, Retrieved from the Internet <URL:http://www.3gpp.org/ftp/tsg_ran/WG2_RL2/TSGR2_94/Docs/> [retrieved on 20160513]
- HUAWEI ET AL: "LTE-NR tight interworking control plane", vol. RAN WG2, no. Nanjing, China; 20160523 - 20160527, 22 May 2016 (2016-05-22), XP051105534, Retrieved from the Internet <URL:http://www.3gpp.org/ftp/Meetings_3GPP_SYNC/RAN2/Docs/> [retrieved on 20160522]

**Description**

Technical Field

The disclosure relates to a wireless communication system, and more particularly to a method and apparatus for easily establishing a connection to a 5G communication system and effectively using a service associated with the 5G communication system.

Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

There is a desire for a method that enables user equipment to easily use 4G and 5G communication systems and enables the user equipment to execute a service suitable for each of the 4G and 5G communication systems in a region where the normal 4G communication system and the 5G communication system coexist.

CN 106 165 488 A discloses an RRC connection establishment method including the steps of: receiving a signaling being sent by the first base station, the signaling carrying system configuration information of a second base station.

US 2016/227459 A1 discloses a master evolved Node-B (MeNB) connecting to a user terminal together with a secondary evolved Node-B (SeNB) in a dual connectivity scheme.

US 2017/181052 A1 discloses a method of 5G/WLAN vertical handover based on fuzzy logic control.

WO 2017/080598 A1 discloses a method of a wireless communication device operably connectable to a first cell of a first PLMN applying a first RAT, the method comprising: detecting a second cell of a second PLMN applying a second RAT; and determining whether a network relation exists between the first cell and the second cell.

KR 101 248 542 B1 discloses a wireless communication system with a first network including a base station apparatus, a second network including a second base station apparatus, and an information providing server.

WO 2017/080598 A1 discloses a method of a wireless communication device operably connectable to a first cell of a first public land mobile network (PLMN) applying a first radio access technology (RAT), comprising: detecting a second cell of a second PLMN applying a second RAT; determining whether a network relation exists between the first cell and the second cell; performing a connection set up to the first cell if it is determined that a network relation exists between the first cell and the second cell; and performing the connection set up to the second cell if it is determined that there does not exist a network relation between the first cell and the second cell.

US 2015/0173004 A1 discloses a method of enabling cell acquisition in a wireless communication including: determining, by a first base station, a Mobile Station (MS) located at a granularity of a first frequency carrier cell sector level; identifying at least one second base station within the first frequency carrier cell sector level; transmitting a second frequency carrier cell search command to the MS; and identifying, by the MS, the second frequency carrier cell based on one or more parameters defined in the search command.

Disclosure of Invention

Technical Problem

Therefore, the disclosure has been made in view of the above-mentioned problems, and an aspect of the disclosure is to enable user equipment that currently uses a normal 4G communication system to easily use a 5G communication system.

Solution to Problem

In accordance with an embodiment of the disclosure, a control method by a user equipment in a wireless communication system is provided as defined in the appended claims.

In accordance with another embodiment of the disclosure, a control method by a first base station in a wireless communication system is provided as defined in the appended claims.

In accordance with an embodiment of the disclosure, a user equipment in a wireless communication system is provided as defined in the appended claims.

In accordance with another embodiment of the disclosure, a first base station in a wireless communication system is provided as defined in the appended claims.

Advantageous Effects of Invention

According to the disclosure, a user equipment, which is connected to a normal 4G communication system, is capable of easily connecting to a 5G communication system, and a user can utilize a service suitable for the 5G communication system via the user equipment.

Brief Description of Drawings

FIGS. 1A and 1B are diagrams illustrating a user equipment that moves from a coverage area of a 4G base station to a coverage area of a 5G base station according to various embodiments of the disclosure;

FIGS. 2A to 2D are diagrams illustrating services providable by a user equipment that is connected to a 5G communication system according to various embodiments of the disclosure;

FIG. 3 is a graph illustrating throughput over time when a user equipment connects to a 5G base station, according to an embodiment of the disclosure;

FIG. 4 is a block diagram illustrating components of a base station according to an embodiment of the disclosure; and

FIGS. 5 and 6 are block diagrams illustrating components of a user equipment according to an embodiment of the disclosure.

Mode for the Invention

Hereinafter, embodiments of the disclosure will be described in detail with reference to the accompanying drawings.

In a description of embodiments of the disclosure, a description of technologies that are already known to those skilled in the art and are not directly relevant to the disclosure is omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not entirely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, "unit" or divided into a larger number of elements, "unit". Moreover, the elements and "units" may be implemented to reproduce one or more CPUs within a device or a security multimedia card.

Generally, a user equipment in the disclosure may include a mobile terminal, and may be a device that has subscribed to a mobile communication system and receives service from the mobile communication system. The mobile terminal may include a smart device, such as a smart phone, a tablet PC, or the like, but this is merely an example, and the disclosure is not limited thereto.

Hereinafter, terms for identifying access nodes, terms indicating network entities, terms indicating messages, terms indicating interfaces between network entities, terms indicating various types of identification information, and the like are merely used for ease of description. Therefore, the disclosure is not limited by the terminologies provided below, and other terms that indicate subjects having equivalent technical meanings may be used.

For convenience of description, the disclosure uses terms and names defined in the 3$^{rd}$-generation partnership project long-term evolution (3GPP LTE) standard. However, the disclosure is not limited by the terms and the names, and may be equally applied to a system that complies with another standard.

The structure of a next-generation mobile communication system to which the disclosure is applicable is described briefly. A radio access network of a next-generation mobile communication system (hereinafter, new radio (NR) or 5G) may include a next-generation base station (a new-radio node B, hereinafter, a NR gNB or a NR base station) and a new-radio core network (NR CN). A user equipment (a new-radio user equipment, hereinafter, a NR UE or a user equipment) may access an external network via an NR gNB and an NR CN.

The NR gNB corresponds to an evolved NodeB (eNB) of a legacy LTE system. The NR gNB is connected to the NR UE via a wireless channel, and may provide better service than service from a legacy nodeB. In the next-generation mobile communication system, all user traffic is serviced via a shared channel. Accordingly, there is a desire for a device that performs scheduling by collecting state information, such as a buffer state, an available transmission power state, a channel condition, and the like in association with UEs. The NR NB takes charge of the same. A single NR gNB generally controls a plurality of cells. In order to implement ultra-high-speed data transmission compared to legacy LTE, a bandwidth greater than or equal to the current maximum bandwidth may be used, and orthogonal frequency-division multiplexing (OFDM) is used as radio-access technology, and beamforming technology is additionally used. Further, a modulation scheme and an adaptive modulation and coding (hereinafter, referred to as an AMC) scheme that determines a channel coding rate are applied in correspondence to a channel condition of the UE. The NR CN performs a function of supporting mobility, configuring a bearer, configuration of a QoS, and the like. The NR CN is a device that is in charge of various control functions, in addition to a mobility management function associated with a UE, and may be connected to a plurality of base stations. Also, the next-generation mobile communication system may interoperate with a legacy LTE system, and an NR CN is connected to an MME via a network interface. The MME is connected to an eNB, which is a legacy base station.

Hereinafter, a base station described in connection with embodiments of the disclosure may be a 5G base station that transmits a signal using a beam formed by beamforming in an ultra-high frequency (mmWave) band, as described above.

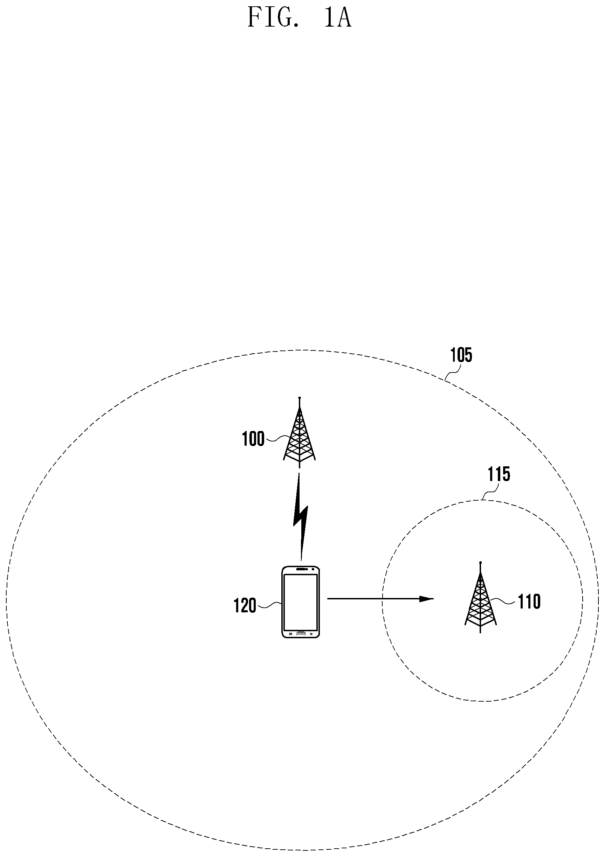

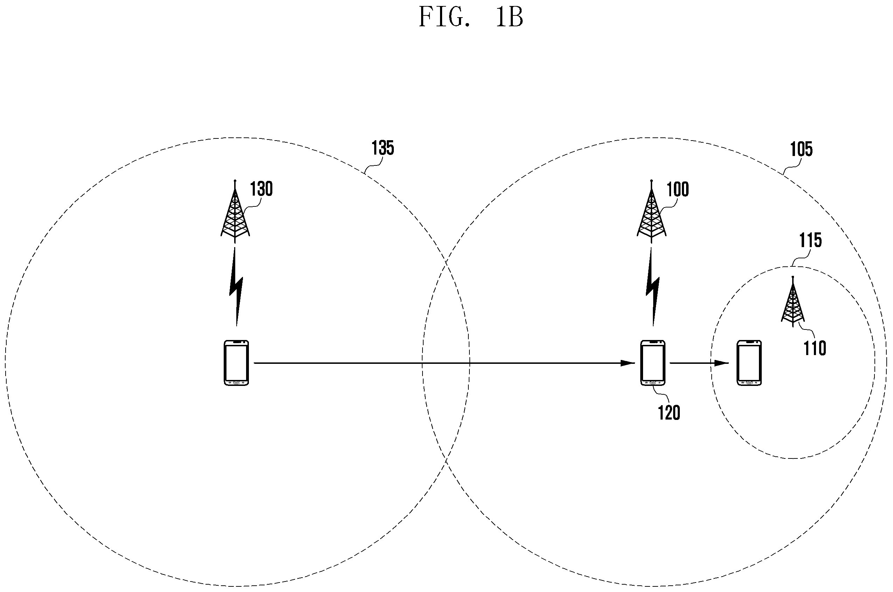

FIGS. 1A and 1B are diagrams illustrating a user equipment (UE) that moves from a coverage area of a 4G base station to a coverage area of a 5G base station according to various embodiments of the disclosure.

As illustrated in FIG. 1A, if a UE 120 exists in a coverage 105 of a 4G base station 100, the UE 120 is connected to the 4G base station 100 and may use a 4G communication system.

The 4G base station 100 and a 5G base station 110 may coexist. Therefore, the UE 120 is connected to one of the 4G base station 100 and the 5G base station 110, and may use the 4G communication system provided by the 4G base station 100, or may use the 5G communication system provided by the 5G base station 110.

FIG. 1A illustrates an embodiment in which the UE 120 moves from the 4G base station 100 to the 5G base station 110. Therefore, if the UE 120 arrives in a coverage area 115 of the 5G base station 110, the UE 120 may connect to the 5G base station 110. For example, the UE 120 may perform handover from the 4G base station 100 to the 5G base station 110.

Also, as illustrated in FIG. 1A, generally, the coverage area 115 of the 5G base station 110 may be narrower than the coverage area 105 of the 4G base station 100. Therefore, even though the UE 120, which is connected to the 4G base station 100, is not present in the coverage area 115 of the 5G base station 110 or is not present within a threshold distance from the coverage area 115, the UE 120 may receive information associated with the 5G base station 110 from the 4G base station 100.

For example, the 4G base station 100 may connect to the 5G base station 110 via an X2 interface. Therefore, the 4G base station 100 may have information associated with the 5G base station 110, and may transmit the information associated with the 5G base station 110 to the terminal 120. Particularly, the 4G base station 100 may inform the UE 120 existing in the coverage area 105 that the 5G base station 110 exists within a threshold distance.

The 4G base station 100 may transmit a public land mobile network (PLMN) identifier of the 5G base station 110 to the UE 120, as information associated with the 5G base station 110.

The UE 120 that receives the information associated with the 5G base station may attempt to connect to the 5G base station 110. For example, the UE 120 may include both a 4G chip and a 5G chip. The UE 120 may turn on only the 4G chip and turn off the 5G chip until the information associated with the 5G base station is received. Therefore, the UE 120 may turn on the 5G chip when receiving the information associated with the 5G base station 110 from the 4G base station 100. The UE 120 may attempt to connect to the 5G base station 110.

However, if connection to the 5G base station 110 is not allowed by reason of congestion in the 5G communication system provided by the 5G base station 110, the UE 120 maintains the connection to the 4G base station 100. Therefore, the UE 120 may again turn off the 5G chip, and may continue using the 4G communication system provided by the 4G base station 100.

FIG. 1B is a diagram illustrating a UE that moves from the coverage area of a 4G base station to the coverage area of a 5G base station according to another embodiment of the disclosure.

FIG. 1B is a diagram illustrating an embodiment in which the UE 120 exists in a coverage area 135 of another 4G base station 130 before entering the coverage area 105 of the 4G base station 100.

As illustrated in the drawing, a 5G base station is not present within a threshold distance of the other 4G base station 130. Therefore, the UE 120 may not receive information associated with the 5G base station. For example, the other 4G base station 130 may broadcast only a 4G PLMN ID.

The UE 120 may perform handover from the other 4G base station 130 to the 4G base station 100 by moving from the coverage area 135 of the other 4G base station 130 to the coverage area 105 of the 4G base station 100. As described above, the UE 120 may receive, from the 4G base station 100, information associated with the 5G base station 110, in addition to information associated with the 4G base station. For example, the UE 120 may receive, from the 4G base station 100, both the PLMN ID of the 4G base station and the PLMN ID of the 5G base station.

According to the above-described method, if the UE 120 attempts to connect to the 5G base station 110, unnecessary signaling expenses may not be incurred, which is advantageous.

The UE 120, which receives the information associated with the 5G base station 110 from the 4G base station 100, may perform a service corresponding to a 5G communication system. For example, the UE 120 may run an application that operates in the 5G communication system. Alternatively, the UE 120 may change an execution level of an application to a level corresponding to the 5G communication system.

For example, via application profiling, the UE 120 may activate a configured service or application only when a 5G communication system is used.

Particularly, if the UE 120 is connected to the 5G base station 120, the UE 120 is capable of downloading a large-capacity file which is greater than or equal to a threshold size (e.g., 1 gigabyte). For example, even if a download command is not input separately by a user, the UE 120 is capable of downloading the large-capacity file when the UE 120 successfully connects to the 5G base station 120.

Alternatively, the UE 120 may update a background application. For example, although a download command is not input separately by a user, the UE 120 is capable of updating a background application when the UE 120 successfully connects to the 5G base station 120.

The UE 120 may utilize a 5G bandwidth to provide distinguishing services, such as panorama view switching, automatic resolution adjustment, or ultrahigh-capacity file download.

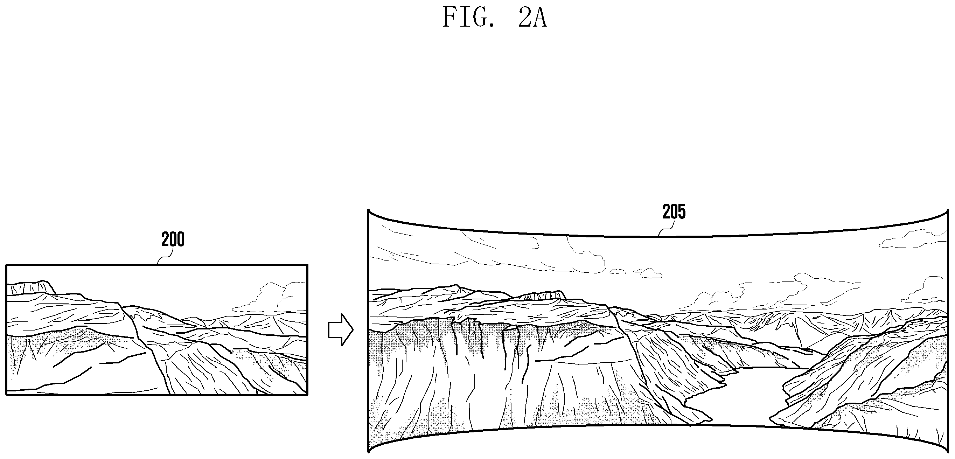

Particularly, FIGS. 2A to 2D are diagrams illustrating services providable by a UE that is connected to a 5G communication system according to various embodiments of the disclosure.

FIG. 2A is a diagram illustrating an embodiment in which a change in a streaming service occurs according to an embodiment of the disclosure. For example, a UE, which is connected to a 4G base station and uses a 4G communication system, may receive a streaming service of a 2D image 200. In this instance, if the UE is connected to a 5G base station according to the above-described method, the UE may change the currently received streaming service to a wide-angle 3D image 205.

Particularly, an example in which both a streaming service of a 2D image and a streaming service of a 3D image are provided is considered. The UE may receive a streaming service of the 2D image 200 while the UE receives 4G wireless communication service from a 4G base station. If the UE receives the PLMN ID of a 5G base station from the 4G base station and detects that the 5G base station exists within a predetermined distance, the UE may turn on a 5G chip. Subsequently, the UE may attempt to connect to the 5G base station. In this instance, if the UE currently performs a streaming service, the UE may perform preparation in order to change the streaming service from a 2D image to a wide-angle 3D image when connection to the 5G base station is successfully established. When the UE successfully connects to the 5G base station, the UE downloads a wide-angle 3D image and reproduces a streaming service.

Meanwhile, if the UE fails to connect to the 5G base station, the UE continuously downloads the 2D image from the 4G base station, and may reproduce a streaming service of the 2D image.

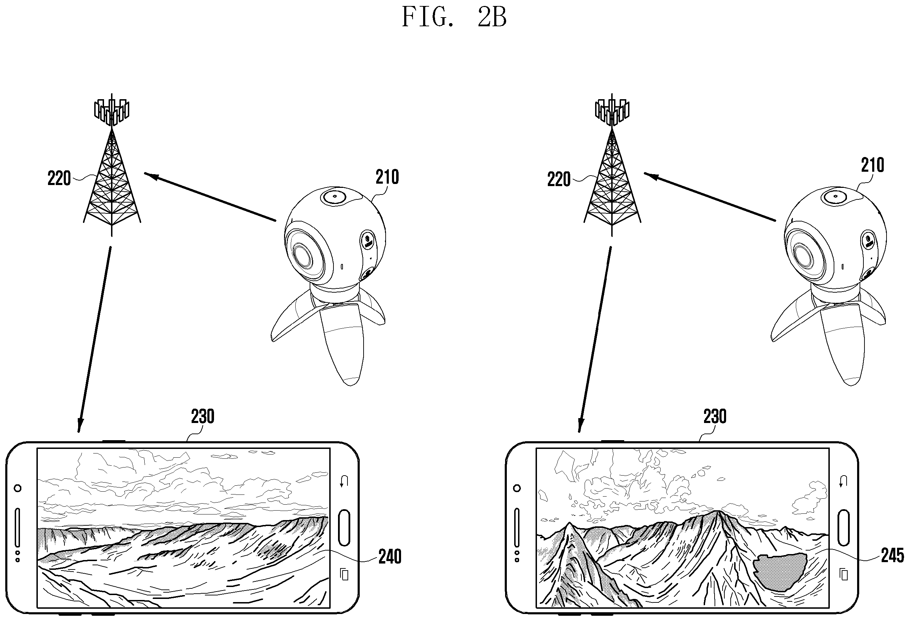

FIG. 2B is a diagram illustrating an embodiment in which a change of a panorama function occurs according to another embodiment of the disclosure. For example, a UE 230, which is connected to a 4G base station and uses a 4G communication system, may receive a normal image 240. In this instance, if the UE 230 connects to a 5G base station according to the above-described method, the UE 230 may change the currently received image to a panorama image 245.

For example, a camera 210 including a 360-degree rotating function may shoot and transmit a panorama image to the base station 220. In this instance, the base station 220 may include a 4G base station and a 5G base station.

If the base station 220 is a 4G base station, the base station 220 may not transmit a panorama image to the connected UE 230, but may transmit a normal image 240 which is based on at least a part of the panorama image.

As described above, if the UE 230 receives the PLMN ID of a 5G base station from the 4G base station and detects that the 5G base station exists within a predetermined distance, the UE 230 may turn on a 5G chip. Subsequently, the UE 230 may attempt to connect to the 5G base station. In this instance, if an image reproduction application is running, the UE may perform preparation in order to change the image, which is reproduced, from a normal image to a panorama image when connection to the 5G base station is successfully established. If the UE successfully connects to the 5G base station, the UE may download a panorama image from the 5G base station. The UE may reproduce the panorama image via the running image reproduction application.

Meanwhile, if the UE fails to connect to the 5G base station, the UE continues downloading the normal image from the 4G base station, and may continue reproducing the normal image.

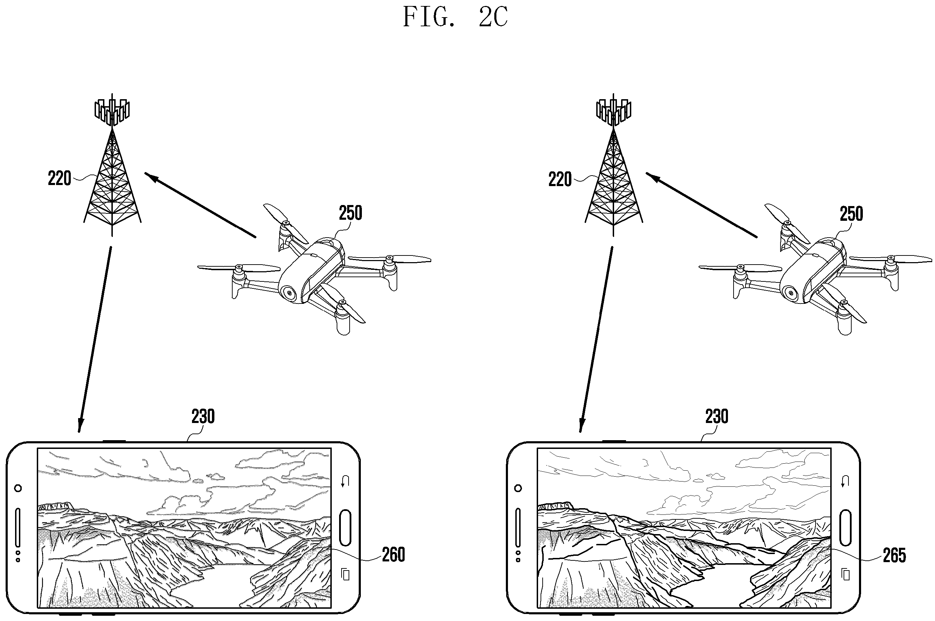

FIG. 2C is a diagram illustrating an embodiment in which a change occurs in a quality of an image reproduced by a UE, according to another embodiment of the disclosure. For example, the UE 230, which is connected to a 4G base station and uses a 4G communication system, may receive a 4G full HD image 260. In this instance, if the UE 230 connects to the 5G base station according to the above-described method, the UE 230 may change the image being received to a 5G ultra HD image 265.

For example, an imaging device 250, such as a drone, may shoot an image and transmit the same to the base station 220. In this instance, the base station 220 may be a 4G base station or a 5G base station.

If the base station 220 is a 4G base station, the base station 220 may transmit the 4G full HD image 260 to the connected UE 230.

As described above, if the UE 230 receives the PLMN ID of a 5G base station from the 4G base station and detects that the 5G base station exists within a predetermined distance, the UE 230 turns on a 5G chip. Subsequently, the UE 230 attempts to connect to the 5G base station. In this instance, if an image reproduction application is running, the UE changes an application reproduction level so as to change the image being reproduced from the 4G full HD image 260 to the 5G ultra HD image 265 when the connection to the 5G base station is successfully established. If the UE successfully connects to the 5G base station, the UE downloads the 5G ultra HD image 265 from the 5G base station. Subsequently, the UE reproduces the 5G ultra HD image 265 via the running image reproduction application.

Meanwhile, if the UE fails to connect to the 5G base station, the UE continues downloading the 4G full HD image 260 from the 4G base station, and may continue reproducing the 4D full HD image 260.

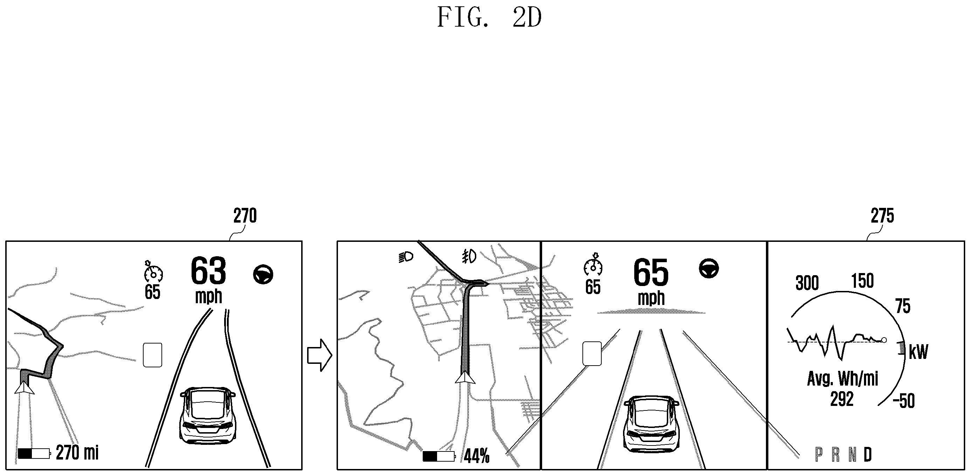

FIG. 2D is a diagram illustrating an embodiment in which a change occurs in a view mode provided by a UE according to another embodiment of the disclosure. In the embodiment of FIG. 2D, the UE may be a moving device such as a vehicle.

For example, if a vehicle is in an autonomous driving mode, in which the vehicle is connected to a 4G base station and uses a 4G communication system, the vehicle may receive information from the 4G base station using a basic view mode 270. In this instance, if the vehicle is connected to a 5G base station according to the above-described method, the vehicle changes a current view mode to an extended view mode 275.

Particularly, the base station may transmit, to the vehicle, information associated with autonomous driving of the vehicle. In this instance, if the base station is a 4G base station, the base station may transmit the information associated with autonomous driving so that the vehicle is capable of displaying the basic view mode 270.

As described above, if the vehicle receives the PLMN ID of a 5G base station from the 4G base station and detects that the 5G base station exists within a predetermined distance, the UE 230 may turn on a 5G chip. Subsequently, the vehicle may attempt to connect to the 5G base station. In this instance, if an application for displaying information associated with autonomous driving is running in the vehicle, the vehicle may change an execution level of the application so as to change the basic view mode 270 of the application to the extended view mode 275 when the connection to the 5G base station is successfully established. If the vehicle successfully connects to the 5G base station, the vehicle may download information associated with the extended view mode 275. The vehicle may display the extended view mode 275.

Meanwhile, if the vehicle fails to connect to the 5G base station, the vehicle may continue downloading the basic view mode 270 from the 4G base station, and may continue displaying the basic view mode 270.

The case in which the vehicle downloads information associated with the basic view mode and the extended view mode when the vehicle is in the autonomous driving mode is merely an example, and the vehicle may download various types of information such as driving information or navigation information from the base station even if the vehicle is not in the autonomous driving mode. Depending on whether the base station to which the vehicle successfully connects is a 4G base station or a 5G base station, the quality of information that the vehicle downloads may be different. Also, the vehicle may control an execution level of an application so as to display information having a different quality depending on whether the base station to which the vehicle successfully connects is a 4G or 5G base station.

Meanwhile, a scheme of selecting a wireless communication service may be determined using a cost function. Particularly, according to an embodiment of the disclosure, Equation 1 is a formula that compares a 4G wireless communication usage fee and a 5G wireless communication usage fee.

[Equation 1]

$$C^{4G} \times \frac{1}{\alpha S^{4G}} \times \beta P^{4G} \geq C^{5G} \times \frac{1}{\alpha S^{5G}} \times \beta P^{5G}$$

In Equation 1, $C^{4G}$ denotes a 4G usage fee, $S^{4G}$ denotes a 4G usage time, $P^{4G}$ denotes 4G power consumption, and $\alpha$ and $\beta$ are constants.

Also, $C^{5G}$ denotes a 5G usage fee, $S^{5G}$ denotes a 5G usage time, $P^{5G}$ denotes 5G power consumption, and $\alpha$ and $\beta$ are constants.

The left-hand side of Equation 1 expresses a 4G usage fee, and the right-hand side expresses a 5G usage fee. Accordingly, if the 4G usage fee expressed on the left-hand side is greater than or equal to the 5G usage fee expressed on the right-hand side, as shown in Equation 1, the UE or the base station may determine to use the 5G wireless communication.

Conversely, if the 4G usage fee expressed on the left-hand side is less than the 5G usage fee expressed on the right-hand side, the UE and the base station may determine to use the 4G wireless communication.

Meanwhile, if connection to the 5G base station is delayed, service begins using the 4G communication system, and the 4G communication system may be switched to the 5G communication system when the 5G communication system is available.

Particularly, an application may be configured, through initial configuration by a UE or a user, to run when connection to 5G base station is established. However, if the connection to the 5G base station is not established within a threshold condition, the application may be configured to run using the 4G communication system.

For example, if the UE is not connected to the 5G base station within 24 hours, which is a configured time, the UE may execute a service such as system updating, cloud synchronization, an online library service, an Internet TV service, media storage downloading, or the like using the 4G communication system.

In other words, although the service, such as system updating, cloud synchronization, an online library service, an Internet TV service, media storage downloading, or the like, is configured to run when the UE connects to the 5G base station, if the UE is not connected to the 5G base station within a threshold time, the UE performs the service, such as system updating, cloud synchronization, an online library service, an Internet TV service, media storage downloading, or the like, using the 4G communication system.

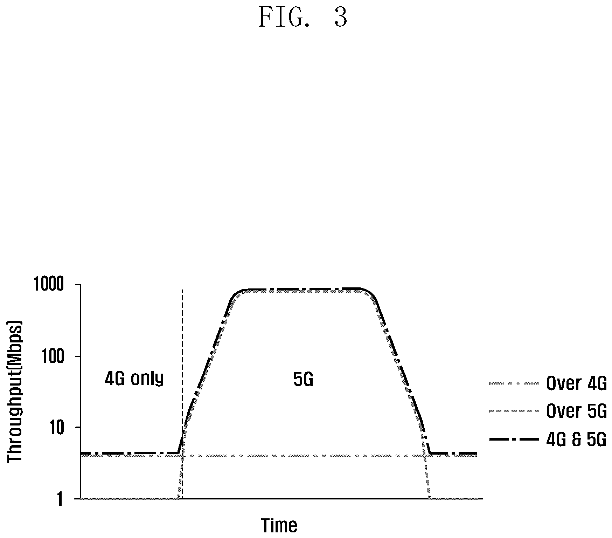

FIG. 3 is a graph illustrating throughput over time when a UE is connected to a 5G base station according to an embodiment of the disclosure, based on the above-description.

Particularly, as illustrated in FIG. 3, until a 4G base station transmits information associated with a 5G base station to a UE, and until the UE attempts to connect to the 5G base station, based on the information associated with the 5G base station, the UE may use a wireless communication service using only 4G.

If the UE uses the wireless communication system using only 4G, the UE may determine whether to execute a service using the 4G communication system or to keep waiting for the connection to the 5G communication system using the cost function shown in Equation 2 below.

[Equation 2]

$$T_{wait} \times \frac{1}{C_{ux}} \geq C_{4G} \times T_{4G\_run}$$

In Equation 2, $T_{wait}$ denotes a 5G entry waiting time, $C_{ux}$ denotes a user's experience cost, $C_{4G}$ denotes a 4G usage fee, and $T_{4G\_run}$ denotes a 4G usage time. Also, $1/C_{ux}$ may be provided as a machine-learning value which is configured for each user according to a user's usage pattern. The left-hand side of Equation 2 expresses a cost incurred while waiting for connection to the 5G wireless communication system, and the right-hand side expresses a 4G wireless communication system waiting cost.

Therefore, if the cost incurred while waiting for connection to the 5G wireless communication system is greater than or equal to the 4G wireless communication system waiting cost, according to Equation 2, the UE may use the 4G communication system to execute the service configured to run using the above-described 5G communication system.

If the cost incurred while waiting for the connection to the 5G wireless communication system is greater than the 4G wireless communication system waiting cost, the UE continues to wait for connection to the 5G base station.

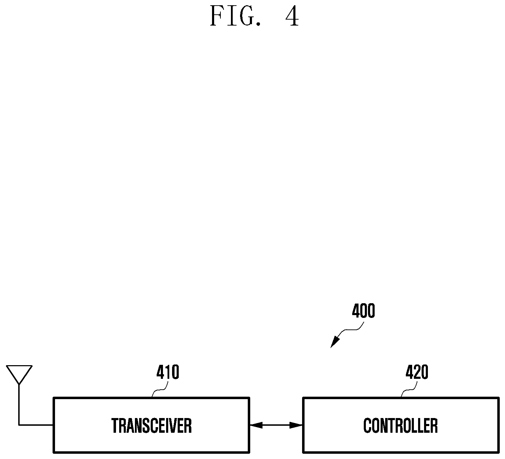

FIG. 4 is a block diagram of components of a base station according to an embodiment of the disclosure. The base station may be a 4G base station or a 5G base station.

A base station 400 may include a transceiver 410 and a controller 420.

First, the transceiver 410 may transmit or receive a signal. For example, the transceiver 410 may perform transmission or reception of a signal with another base station or a UE. If the base station 400 is a 4G base station, the other base station may be a 5G base station.

Meanwhile, the controller 420 may be a component for performing overall control of the base station 400. First, the controller 420 may control the transceiver 410 to transmit information associated with the other base station to the UE.

In this instance, based on the information, a signal for connection to the second base station may be transmitted by the UE to the other base station. If the connection between the UE and the other base station is successfully established, the UE may perform transmission or reception of a signal using a communication system of the other base station.

The information associated with the other base station may be a public land mobile network (PLMN) identifier of the other base station.

Meanwhile, if the information associated with the other base station, such as a PLMN identifier, is received from the UE, the UE may turn on a 5G chip of the UE, which is in a turned-off state, based on the information. Using the 5G chip which is turned on, the UE may transmit a signal for connection to the other base station.

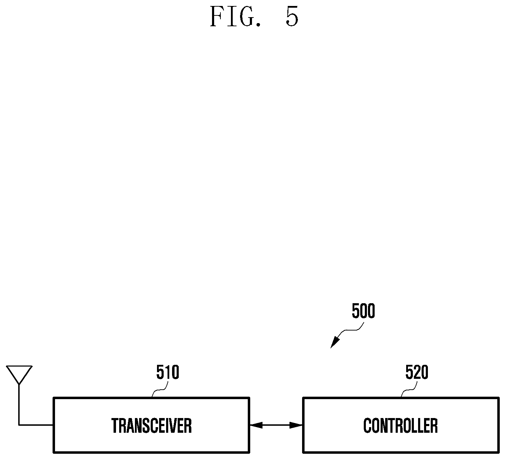

Also, FIG. 5 is a block diagram of components of a base station according to an embodiment of the disclosure.

As illustrated in FIG. 5, a UE 500 may include a transceiver 510 and a controller 520.

First, the transceiver 510 may transmit or receive a signal. For example, the transceiver 510 may perform transmission or reception of a signal with a base station or another UE. The UE 500 may perform transmission or reception of a signal with a 5G base station as well as the 4G base station.

The controller 520 may be a component for performing overall control of the UE 500.

The controller 520 may receive information associated with a second base station from a first base station and transmit a signal for connection to the second base station, based on the information. If the connection to the second base station is successfully established, the controller 520 may control the transceiver 510 to perform transmission or reception of a signal using the communication system of the second base station.

In this instance, the information associated with the second base station may be a public land mobile network (PLMN) identifier of the second base station.

Meanwhile, the UE 500 may further include a 5G chip. In this instance, the controller 520 may perform control so as to turn on the 5G chip, which is in the turned-off state, based on the received information. Using the 5G chip which is turned on, the controller 520 may control the transceiver 510 to transmit a signal for connection to the second base station.

Also, the controller 520 may perform control to run an application corresponding to a service corresponding to the communication system of the second base station, or to change an execution level of the application to a level corresponding to the communication system of the second base station.

The first base station may be an LTE base station and the second base station may be a 5G base station. In addition, if connection to the second base station fails, the controller 520 may control the transceiver 510 to perform transmission or reception of a signal using the communication system of the first base station.

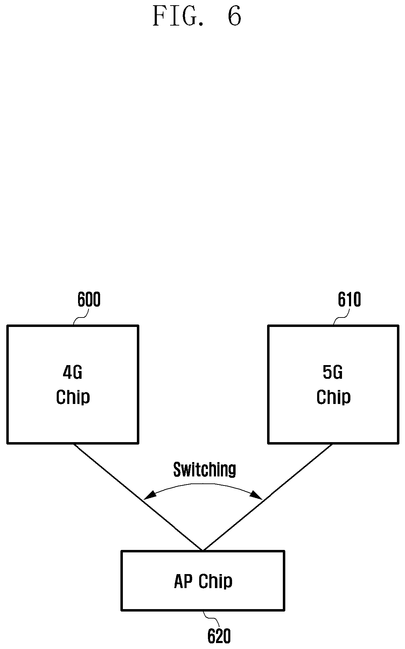

FIG. 6 is a diagram illustrating a 4G chip 600, a 5G chip 610, and an AP chip 620 of a UE. The UE may include both the 4G chip 600 and the 5G chip 610. Under the control of the application processor (AP) chip 620 of the UE, turning on and off of the 4G chip 600 and the 5G chip 610 may be controlled.

For example, until the AP chip 620 of the UE receives information associated with a 5G base station from a 4G base station and attempts connection to the 5G base station, the AP chip 620 connects to the 4G chip 600 and receives a wireless communication service provided from the 4G base station.

If the information associated with the 5G base station is received from the 4G base station and the 5G base station is identified as being within a threshold distance, the AP chip 620 of the UE may switch the connection to the 4G chip 600 to the connection to the 5G chip 610. The AP chip 620 of the UE may attempt to connect to the 5G base station using the 5G chip 610.

According to the above-described method, a UE, which connects to a normal 4G communication system, is capable of easily connecting to a 5G communication system, and a user can utilize a service suitable for the 5G communication system via the UE.

Although embodiments of the disclosure have been shown and described, the disclosure is not limited to the described embodiments. Instead, it will be appreciated by those skilled in the art that changes may be made to these embodiments without departing from the subject matter of the disclosure defined by the claims, and the modified embodiments should not be understood as being separate from the technical idea and perspective of the disclosure.

**Claims**

1. A control method by a user equipment (120) in a wireless communication system, the method comprising:

    receiving a public land mobile network, PLMN, identifier, ID, of a second base station (110) from a first base station (100), while data of a first quality, related to an image reproduction application, is received based on an execution of a communication system of the first base station (100);
    turning on a 5G chip corresponding to a communication system of the second base station (110), which is in a turned-off state, in case that the second base station (110) is detected within a predetermined distance based on the received PLMN ID;
    transmitting a signal for connection to the second base station (110), based on the PLMN ID, after the 5G chip is turned on; and
    receiving data of a second quality, related to the image reproduction application, higher than the first quality based on an execution of the communication system of the second base station (110) using the 5G chip, in case that the connection to the second base station (110) is successfully established.

2. The method as claimed in claim 1, wherein the transmitting the signal comprises:
    transmitting a signal for connection to the second base station (110) using the 5G chip (610), which is turned on.

3. The method as claimed in claim 1, further comprising:

    when the connection to the second base station (110) fails, transmitting or receiving a signal using a communication system of the first base station (100), and
    wherein the first base station (100) is an LTE base station and the second base station (110) is a 5G base station.

4. A control method by a first base station (100) in a wireless communication system, the method comprising:

    transmitting a public land mobile network, PLMN, identifier, ID, of a second base station (110) to a user equipment (120) while data of a first quality, related to an image reproduction application, is received based on an execution of a communication system of the first base station (100) by the user equipment (120),
    wherein, a 5G chip of the user equipment (120) corresponding to a communication system of the second base station (110), which is in a turned-off state, is turned on in case that the second base station (110) is detected, by the user equipment(120), within a predetermined distance based on the PLMN ID of the second base station (110), a signal for connection to the second base station (110) is transmitted by the user equipment (120) to the second base station (110) based on the PLMN ID after the 5G chip is turned on, and the user equipment (120) and the second base station (110) are successfully connected, data of a second quality, related to the image reproduction application, higher than the first quality is received to the user equipment (120) based on an execution of the communication system of the second base station (110) using the 5G chip.

5. A user equipment (120) in a wireless communication system, the user equipment (120) comprising:

    a transceiver (510) configured to transmit or receive a signal;
    a 5G chip (610); and
    a controller (520) configured to:

to control the transceiver (510) to receive a public land mobile network, PLMN, identifier, ID, of a second base station (110) from a first base station (100), while data of a first quality, related to an image reproduction application, is received based on an execution of a communication system of the first base station (100), to control to turn on the 5G chip corresponding to a communication system of the second base station (110), which is in a turned-off state, in case that the second base station (110) is detected within a predetermined distance based on the received PLMN ID,

to transmit a signal for connection to the second base station (110), based on the PLMN ID, after the 5G chip is turned on, and

to receiving data of a second quality, related to the image reproduction application, higher than the first quality based on an execution of the communication system of the second base station (110) using the 5G chip, in case that the connection to the second base station (110) is successfully established.

6. The user equipment (120) as claimed in claim 5, wherein the controller (520) is further configured to control the transceiver (510) to transmit a signal for connection to the second base station (110) using the 5G chip (610) which is turned on.

7. The user equipment (120) as claimed in claim 5, wherein, when the connection to the second base station (110) fails, the controller (520) is further configured to control the transceiver (510) to transmit or receive a signal using a communication system of the first base station (100),

wherein the first base station (100) is an LTE base station and the second base station (110) is a 5G base station.

8. A first base station (100) in a wireless communication system, the first base station (100) comprising:

a transceiver (410) configured to transmit or receive a signal; and

a controller (420) configured to control the transceiver (410) to transmit a public land mobile network, PLMN, identifier, ID, of a second base station (110) to a user equipment (120), while data of a first quality, related to an image reproduction application, is received based on an execution of a communication system of the first base station (100) by the user equipment (120), and

wherein, a 5G chip of the user equipment (120) corresponding to a communication system of the second base station (110), which is in a turned-off state, is turned on in case that the second base station (110) is detected, by the user equipment (120), within a predetermined distance based on the PLMN ID of the second base station (110), a signal for connection to the second base station (110) is transmitted by the user equipment (120) to the second base station (110), based on the PLMN ID after the 5G chip is turned on, and the user equipment (120) and the second base station (110) are successfully connected, data of a second quality, related to the image reproduction application, higher than the first quality is received to the user equipment (120) based on an execution of the communication system of the second base station (110) using the 5G chip.

**Patentansprüche**

1. Steuerverfahren, das von einem Benutzergerät (120), in einem drahtlosen Kommunikationssystem durchgeführt wird, wobei das Verfahren umfasst:

Empfangen einer Kennung, ID, eines öffentlichen terrestrischen Mobilfunknetzes, PLMN, einer zweiten Basisstation (110) von einer ersten Basisstation (100), während Daten einer ersten Qualität, die sich auf eine Bildwiedergabeanwendung beziehen, basierend auf einer Ausführung eines Kommunikationssystems der ersten Basisstation (100) empfangen werden;

Einschalten eines 5G-Chips, der einem Kommunikationssystem der zweiten Basisstation (110) entspricht, das sich in einem ausgeschalteten Zustand befindet, für den Fall, dass die zweite Basisstation (110) innerhalb einer vorbestimmten Entfernung basierend auf der empfangenen PLMN-ID erfasst wird;

Übertragen eines Signals zur Verbindung mit der zweiten Basisstation (110) basierend auf der PLMN-ID, nachdem der 5G-Chip eingeschaltet wurde; und

Empfangen von Daten einer zweiten Qualität, die sich auf die Bildwiedergabeanwendung beziehen, die höher ist als die erste Qualität, basierend auf einer Ausführung des Kommunikationssystems der zweiten Basisstation (110) unter Verwendung des 5G-Chips, falls die Verbindung zur zweiten Basisstation (110) erfolgreich hergestellt wird.

2. Verfahren nach Anspruch 1, wobei das Übertragen des Signals umfasst:

Übertragen eines Signals zur Verbindung mit der zweiten Basisstation (110) unter Verwendung des 5G-Chips (610), der eingeschaltet ist.

3. Verfahren nach Anspruch 1, ferner umfassend:

wenn die Verbindung zur zweiten Basisstation (110) fehlschlägt, Senden oder Empfangen eines Signals unter Verwendung eines Kommunikationssystems der ersten Basisstation (100), und
wobei die erste Basisstation (100) eine LTE-Basisstation ist und die zweite Basisstation (110) eine 5G-Basisstation ist.

4. Steuerverfahren durch eine erste Basisstation (100) in einem drahtlosen Kommunikationssystem durchgeführt wird, wobei das Verfahren umfasst:

Übertragen einer Kennung, ID, eines öffentlichen terrestrischen Mobilfunknetzes, PLMN, einer zweiten Basisstation (110) an ein Benutzergerät (120), während Daten einer ersten Qualität, die sich auf eine Bildwiedergabeanwendung beziehen, basierend auf einer Ausführung eines Kommunikationssystems der ersten Basisstation (100) durch das Benutzergerät (120) empfangen werden,
wobei ein 5G-Chip des Benutzergeräts (120), der einem Kommunikationssystem der zweiten Basisstation (110) entspricht, das sich in einem ausgeschalteten Zustand befindet, in dem Fall eingeschaltet wird, dass die zweite Basisstation (110) durch das Benutzergerät (120) innerhalb einer vorbestimmten Entfernung basierend auf der PLMN-ID der zweiten Basisstation (110) erfasst wird, ein Signal zur Verbindung mit der zweiten Basisstation (110) durch das Benutzergerät (120) an die zweite Basisstation (110) basierend auf der PLMN-ID übertragen wird, nachdem der 5G-Chip eingeschaltet wurde, und das Benutzergerät (120) und die zweite Basisstation (110) erfolgreich verbunden sind, Daten einer zweiten Qualität, die sich auf die Bildwiedergabeanwendung beziehen, die höher als die erste Qualität ist, an das Benutzergerät (120) basierend auf einer Ausführung des Kommunikationssystems der zweiten Basisstation (110) unter Verwendung des 5G-Chips empfangen werden.

5. Benutzergerät (120) in einem drahtlosen Kommunikationssystem, wobei das Benutzergerät (120) umfasst:

einen Transceiver (510), der konfiguriert ist, um ein Signal zu übertragen oder zu empfangen;
einen 5G-Chip (610); und
eine Steuerung (520), die konfiguriert ist zum

Steuern des Transceivers (510) zum Empfangen einer Kennung, ID, eines öffentlichen terrestrischen Mobilfunknetzes, PLMN, einer zweiten Basisstation (110) von einer ersten Basisstation (100), während Daten einer ersten Qualität, die sich auf eine Bildwiedergabeanwendung beziehen, basierend auf einer Ausführung eines Kommunikationssystems der ersten Basisstation (100) empfangen werden,
Steuern zum Einschalten des 5G-Chips, der einem Kommunikationssystem der zweiten Basisstation (110) entspricht, das sich in einem ausgeschalteten Zustand befindet, für den Fall, dass die zweite Basisstation (110) innerhalb einer vorbestimmten Entfernung basierend auf der empfangenen PLMN-ID erfasst wird,
Übertragen eines Signals zur Verbindung mit der zweiten Basisstation (110) basierend auf der PLMN-ID, nachdem der 5G-Chip eingeschaltet wurde, und
Empfangen von Daten einer zweiten Qualität, die sich auf die Bildwiedergabeanwendung beziehen, die höher ist als die erste Qualität, basierend auf einer Ausführung des Kommunikationssystems der zweiten Basisstation (110) unter Verwendung des 5G-Chips, falls die Verbindung zur zweiten Basisstation (110) erfolgreich hergestellt wird.

6. Benutzergerät (120) nach Anspruch 5, wobei die Steuerung (520) ferner konfiguriert ist, um den Transceiver (510) zu steuern, um ein Signal zur Verbindung mit der zweiten Basisstation (110) unter Verwendung des eingeschalteten 5G-Chips (610) zu übertragen.

7. Benutzergerät (120) nach Anspruch 5, wobei, wenn die Verbindung zur zweiten Basisstation (110) fehlschlägt, die Steuerung (520) ferner konfiguriert ist, um den Transceiver (510) zu steuern, um ein Signal unter Verwendung eines Kommunikationssystems der ersten Basisstation (100) zu übertragen oder zu empfangen, wobei die erste Basisstation (100) eine LTE-Basisstation ist und die zweite Basisstation (110) eine 5G-Basisstation ist.

8. Erste Basisstation (100) in einem drahtlosen Kommunikationssystem, wobei die erste Basisstation (100) umfasst:

einen Transceiver (410), der konfiguriert ist, um ein Signal zu übertragen oder zu empfangen; und

eine Steuerung (420), die konfiguriert ist, um den Transceiver (410) zu steuern zum Übertragen einer Kennung, ID, eines öffentlichen terrestrischen Mobilfunknetzes, PLMN, einer zweiten Basisstation (110) an ein Benutzergerät (120), während Daten einer ersten Qualität, die sich auf eine Bildwiedergabeanwendung beziehen, basierend auf einer Ausführung eines Kommunikationssystems der ersten Basisstation (100) durch das Benutzergerät (120) empfangen werden, und

wobei ein 5G-Chip des Benutzergeräts (120), der einem Kommunikationssystem der zweiten Basisstation (110) entspricht, das sich in einem ausgeschalteten Zustand befindet, in dem Fall eingeschaltet wird, dass die zweite Basisstation (110) durch das Benutzergerät (120) innerhalb einer vorbestimmten Entfernung basierend auf der PLMN-ID der zweiten Basisstation (110) erfasst wird, ein Signal zur Verbindung mit der zweiten Basisstation (110) durch das Benutzergerät (120) an die zweite Basisstation (110) basierend auf der PLMN-ID übertragen wird, nachdem der 5G-Chip eingeschaltet wurde, und das Benutzergerät (120) und die zweite Basisstation (110) erfolgreich verbunden sind, Daten einer zweiten Qualität, die sich auf die Bildwiedergabeanwendung beziehen, die höher als die erste Qualität ist, an das Benutzergerät (120) basierend auf einer Ausführung des Kommunikationssystems der zweiten Basisstation (110) unter Verwendung des 5G-Chips empfangen werden.

## Revendications

1. Procédé de commande exécuté par un équipement utilisateur (120) dans un système de communication sans fil, le procédé comprenant :

recevoir un identifiant de réseau mobile terrestre, PLMN, d'une deuxième station de base (110) en provenance d'une première station de base (100), alors que des données d'une première qualité, relatives à une application de reproduction d'image, sont reçues sur la base d'une exécution d'un système de communication de la première station de base (100) ;

activer une puce 5G correspondant à un système de communication de la deuxième station de base (110), qui est dans un état désactivée, dans le cas où la deuxième station de base (110) est détectée dans une distance prédéterminée sur la base de l'identifiant PLMN reçu ;

transmettre un signal de connexion à la deuxième station de base (110), en se basant sur l'identifiant PLMN, après la mise sous tension de la puce 5G ; et

recevoir des données d'une deuxième qualité, relatives à l'application de reproduction d'image, supérieure à la première qualité, en se basant sur une exécution du système de communication de la deuxième station de base (110) utilisant la puce 5G, dans le cas où la connexion à la deuxième station de base (110) est établie avec succès.

2. Procédé de la revendication 1, dans lequel la transmission du signal comprend :
transmettre un signal de connexion à la deuxième station de base (110) à l'aide de la puce 5G (610), qui est activée.

3. Procédé de la revendication 1, comprenant en outre :

lorsque la connexion à la deuxième station de base (110) échoue, transmettre ou recevoir un signal à l'aide d'un système de communication de la première station de base (100), et

dans lequel la première station de base (100) est une station de base LTE et la deuxième station de base (110) est une station de base 5G.

4. Procédé de commande exécuté par une station de base (100) dans un système de communication sans fil, le procédé comprenant :

transmettre un identifiant de réseau mobile terrestre public, PLMN, d'une deuxième station de base (110) à un équipement utilisateur (120) alors que des données d'une première qualité, relatives à une application de reproduction d'image, sont reçues en se basant sur une exécution d'un système de communication de la première station de base (100) par l'équipement utilisateur (120),

dans lequel une puce 5G de l'équipement utilisateur (120) correspondant à un système de communication de la deuxième station de base (110), qui est dans un état désactivée, est activée dans le cas où la deuxième station de base (110) est détectée, par l'équipement utilisateur (120), dans une distance prédéterminée en se basant sur l'ID PLMN de la deuxième station de base (110), un signal de connexion à la deuxième station de base (110) est transmis par l'équipement utilisateur (120) à la deuxième station de base (110) sur la base de l'ID PLMN après l'activation de la puce 5G, et l'équipement utilisateur (120) et la deuxième station de base (110) sont connectés avec succès, des données d'une deuxième qualité relatives à l'application de reproduction d'image, supérieure à la première qualité sont reçues par l'équipement utilisateur (120) en se basant sur une exécution du système de communication de la deuxième station de base (110) à l'aide de la puce 5G.

5. Équipement utilisateur (120) dans un système de communication sans fil, l'équipement utilisateur (120) comprenant :

un émetteur-récepteur (510) configuré pour transmettre ou pour recevoir un signal ;
une puce 5G (610) ; et
une commande (520) configurée pour :

commander l'émetteur-récepteur (510) pour recevoir un identifiant de réseau mobile terrestre public, PLMN, d'une deuxième station de base (110) depuis une première station de base (100), alors que des données d'une première qualité, relatives à une application de reproduction d'image, sont reçues en se basant sur une exécution d'un système de communication de la première station de base (100),
commander d'activer la puce 5G correspondant à un système de communication de la deuxième station de base (110), qui est dans un état désactivée, dans le cas où la deuxième station de base (110) est détectée dans une distance prédéterminée sur la base de l'identifiant PLMN reçu,
transmettre un signal de connexion à la deuxième station de base (110), en se basant sur l'identifiant PLMN, après la mise sous tension de la puce 5G, et
recevoir des données d'une deuxième qualité, relatives à l'application de reproduction d'image, supérieure à la première qualité, en se basant sur une exécution du système de communication de la deuxième station de base (110) utilisant la puce 5G, dans le cas où la connexion à la deuxième station de base (110) est établie avec succès.

6. Équipement utilisateur (120) selon la revendication 5, dans lequel la commande (520) est en outre configurée pour commander l'émetteur-récepteur (510) afin qu'il transmette un signal de connexion à la deuxième station de base (110) à l'aide de la puce 5G (610) qui est activée.

7. Équipement utilisateur (120) selon la revendication 5, dans lequel, lorsque la connexion à la deuxième station de base (110) échoue, la commande (520) est en outre configurée pour commander l'émetteur-récepteur (510) afin qu'il transmette ou reçoive un signal à l'aide d'un système de communication de la première station de base (100), dans lequel la première station de base (100) est une station de base LTE et la deuxième station de base (110) est une station de base 5G.

8. Première station de base (100) dans un système de communication sans fil, la station de base (100) comprenant

un émetteur-récepteur (410) configuré pour transmettre ou pour recevoir un signal ; et
une commande (420) configurée pour commander l'émetteur-récepteur (410) afin de transmettre un identifiant de réseau mobile terrestre public, PLMN, d'une deuxième station de base (110) à un équipement utilisateur (120), tandis que des données d'une première qualité, relatives à une application de reproduction d'image, sont reçues sur la base d'une exécution d'un système de communication de la première station de base (100) par l'équipement utilisateur (120), et
dans laquelle une puce 5G de l'équipement utilisateur (120) correspondant à un système de communication de la deuxième station de base (110), qui est dans un état désactivée, est activée dans le cas où la deuxième station de base (110) est détectée, par l'équipement utilisateur (120), dans une distance prédéterminée en se basant sur l'ID PLMN de la deuxième station de base (110), un signal de connexion à la deuxième station de base (110) est transmis par l'équipement utilisateur (120) à la deuxième station de base (110) sur la base de l'ID PLMN après l'activation de la puce 5G, et l'équipement utilisateur (120) et la deuxième station de base (110) sont connectés avec succès, des données d'une deuxième qualité relatives à l'application de reproduction d'image, supérieure à la première qualité sont reçues par l'équipement utilisateur (120) en se basant sur une exécution du système de communication de la deuxième station de base (110) à l'aide de la puce 5G.

FIG. 1A

FIG. 1B

FIG. 2A

FIG. 2B

# FIG. 2C

FIG. 2D

275

300  150  75  kW  -50

Avg. Wh/mi  292

P R N D

65
mph

65

44%

270

63
mph

65

270 mi

FIG. 3

FIG. 4

400

410
TRANSCEIVER

420
CONTROLLER

FIG. 5

FIG. 6

**EP 3 651 543 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106165488 A
- US 2016227459 A1
- US 2017181052 A1
- WO 2017080598 A1
- KR 101248542 B1
- US 20150173004 A1